# EUROPEAN PATENT APPLICATION

(11) **EP 4 749 473 A1**
(43) Date of publication of application: **27.05.2026**
(21) Application number: 25215449.7
(22) Date of filing: 13.11.2025
(51) Int. Cl.: G06F 16/2452

(54) **QUERY GENERATION**

(30) Priority: 22.11.2024 US 202418956600
(71) Applicant: NCR Atleos Corporation, Atlanta Georgia 30308-1007 (US)
(72) Inventor: DAKKA, Rama Kumar, 500072 Hyderabad (IN); KOTHAMASU, Raghunath Veera Venkata Ratna, 500019 Hyderabad (IN); RAJ, Bipul, 500084 Hyderabad (IN); AMERABOINA, Adinarayana, 500090 Hyderabad (IN); JOHNSTON, Craig, Dunfermline, KY11 8GL (GB); VAYARA, Saikrishna, 500062 Hyderabad (IN)
(74) Representative: Secerna LLP

(57) **Abstract**

A method and a computing device are disclosed. The method comprises receiving, by a terminal management application responsible for a plurality of Automated Teller Machines, ATMs, a user-specific query requesting information associated with the plurality of ATMs; transmitting, by the terminal management application, query data, based on the user-specific query, to a pre-trained Large Language Model, LLM; and responsive to the query data being provided as an input into the pre-trained LLM, receiving, by the terminal management application, at least one database query statement, for querying a relational database that comprises data associated with the plurality of ATMs, from the pre-trained LLM.

## Description

### Field

The present invention relates to a method and computing device for automatically generating at least one database query statement for querying a relational database. In particular, but not exclusively, the present invention relates to a methodology by which a user can input a user-specific query, for example in natural language, requesting information associated with a plurality of Automated Teller Machines, and a pre-trained Large Language Model, for example a generative AI-based chatbot, can automatically generate at least one database query statement, corresponding to the user-specific query, for querying a relational database.

### Background

Automated Teller Machines (ATMs) are known. An automated teller machine (ATM) is an electronic banking outlet that allows customers/users to complete basic transactions without the aid of a bank representative or teller. Anyone with a credit card or debit card can access transaction services at most ATMs. ATMs provide both basic cash-dispensing services as well as advanced functions, including: check depositing, account information access, fund transfers, marketing of relevant products and the like. Historically, ATMs have not included any functionality to enable a user to communicate with a remote bank teller. However, newer types of ATM do have additional functionality that enables a user to communicate with a bank teller. These new types of ATMs are sometimes referred to as Interactive Teller Machines (ITMs). ITMs offer the basic components of an ATM, such as the receipt printer and card reader; however, ITMs usually include additional features such as: a video camera and handset (including microphone and speaker) for conducting conversations with a teller, a coin dispenser for distributing different denominations of coins, an ID scanner for authenticating the customer, a signature pad and the like.

From time to time, owners or operators of a fleet of ATMs (e.g. a bank, financial institution independent service operator, ATM manufacturer, or the like) would like information about the ATMs in their fleet. For example, an operator may wish to know how many ATMs they have in total or in a certain location, how many ATMs are operational, the cash balance within each ATM, or the like. However, each different operator may have different requirements and may wish to know different information about their ATMs or have the information provided in a different format. Moreover, different users who work within a single operator may wish to know or see different information depending on their job role. For example, certain users may want to know cash management information and other users may want to know incident or device fault information.

Currently, providing customized information to a user based on a user's custom request is difficult and/or time consuming as it may require manual and custom development of a custom report. For example, a development team within an operator or ATM manufacturer may have to produce a custom report in response to a user's request, using custom queries from a database or the like. In addition, providing customizable reports with many options to allow the user to choose what information to show also requires custom and time-consuming development work, and may result in an undesirable, complex customizable report with many options that some users rarely need.

### Summary

It is an aim of the present invention to at least partly mitigate one or more of the above-mentioned problems.

It is an aim of the present invention to allow a user to automatically generate at least one database query statement for querying a relational database that comprises data associated with a plurality of Automated Teller Machines.

It is an aim of the present invention to allow a user to provide a query in natural language to request information from a relational database that comprises data associated with a plurality of Automated Teller Machines.

It is an aim of the present invention to allow a user to automatically generate custom reports on user-specific queries of information from a relational database that comprises data associated with a plurality of Automated Teller Machines.

It is an aim of the present invention to allow a user to more easily query a relational database that comprises data associated with a plurality of Automated Teller Machines.

It is an aim of the present invention to allow a user to more easily customise display of a report on information from a relational database that comprises data associated with a plurality of Automated Teller Machines.

It is an aim of the present invention to provide a Terminal Management system that helps allow different users to see the information they want to know about their terminals. For example, certain users have users may have unique requirements and different users may want to see different information, e.g. some users may want cash management information, others may want device fault information, etc. With existing Terminal Management systems, it may be difficult for users to customize the information they want to see and report on. In addition, requests for custom reports may often need custom development work, and can result in a complex solution with many options that some users rarely need.

It is an aim of the present invention to provide a Terminal Management system that is less complex to use and/or less time consuming to develop than existing solutions. For example, a legacy Terminal Management system may have a large set of custom reports that is complex to navigate, where each report may have been built to customer requirements to provide specific terminal information for that customer type. Building and maintaining these reports may be complex and time-consuming for development teams.

According to a first aspect of the present invention there is provided a computer-implemented method for automatically generating, responsive to a user-specific query, at least one database query statement for querying a relational database that comprises data associated with a plurality of Automated Teller Machines, comprising the steps of receiving, by a terminal management application responsible for a plurality of Automated Teller Machines, ATMs, a user-specific query requesting information associated with the plurality of ATMs; transmitting, by the terminal management application, query data, based on the user-specific query, to a pre-trained Large Language Model, LLM; and responsive to the query data being provided as an input into the pre-trained LLM, receiving, by the terminal management application, at least one database query statement, for querying a relational database that comprises data associated with the plurality of ATMs, from the pre-trained LLM.

Aptly, the method further comprising transmitting the query data comprises transmitting message data indicative of the user-specific query and transmitting pre-defined system message data indicative of a pre-defined system message for enabling generation of said at least one database query statement.

Aptly, the method further comprising providing the pre-defined system message as a message comprising information for a schema of the relational database.

Aptly, the method further comprising providing the pre-defined system message as a message comprising information for a type of syntax to use for said at least one database query statement.

Aptly, the method further comprising providing the pre-defined system message as a message comprising information for a relational mapping between entries in the relational database.

Aptly, the method further comprising providing the pre-defined system message as a message comprising information for at least one translated term to use for respective user inputted terminology.

Aptly, the method further comprising providing the pre-defined system message as a message comprising information for confidential entries in the relational database.

Aptly, the method further comprising prior to transmitting the query data, appending the pre-defined system message data to the message data.

Aptly, the method further comprising receiving, by the terminal management application, the user-specific query as text data input via at least one user input device of a computing device of a user.

Aptly, the method further comprising providing the at least one database query statement output from the pre-trained LLM in Structured Query Language, SQL.

Aptly, the method further comprising transmitting, by the terminal management application, the at least one database query statement to the relational database to query the relational database for said information associated with the plurality of ATMs.

Aptly, the method further comprising receiving, by the terminal management application, results data comprising data indicative of said information associated with the plurality of ATMs from the relational database.

Aptly, the method further comprising responsive to receiving the results data, transmitting the results data to a computing device of a user who provided the user-specific query.

Aptly, the method further comprising displaying, on a display of the computing device, at least one result associated with the results data.

Aptly, the method further comprising displaying the at least one result in tabular format.

Aptly, the method further comprising providing the pre-trained LLM as a generative pre-trained transformer type LLM.

Aptly, the method further comprising providing the pre-trained LLM as a generative AI-based chatbot.

Aptly, the method further comprising inputting the user-specific query to a web-interface of a browser application executing on a computing device of a user; and receiving, by the terminal management application, the user-specific query from the computing device.

According to a second aspect of the present invention there is provided a computing device, comprising at least one processor arranged to execute a terminal management application that is responsible for a plurality of Automated Teller Machines, ATMs, and that is configured to receive a user-specific query requesting information associated with the plurality of ATMs; transmit query data, based on the user-specific query, to a pre-trained Large Language Model, LLM; and receive at least one database query statement, for querying a relational database that comprises data associated with the plurality of ATMs, from the pre-trained LLM.

According to a third aspect of the present invention there is provided a computer program comprising instructions which, when executed by a computing device, cause the computing device to carry out the steps of the method defined by the first aspect of the present invention.

Certain embodiments of the present invention provide a method for automatically generating, responsive to a user-specific query, at least one database query statement for querying a relational database that comprises data associated with a plurality of Automated Teller Machines.

Certain embodiments of the present invention provide a pre-trained Large Language Model (LLM), such as generative pre-trained transformer type LLM and/or a generative AI-based chatbot, configured to generate database query statements and integrated with a terminal management application responsible for a plurality of Automated Teller Machines, such that a user can request information associated with the plurality of ATMs using a user-specific query in natural language and automatically receive results of their query from a relational database. Optionally, the pre-trained LLM converts the natural language query to Structured Query Language (SQL) for querying the database.

Certain embodiments of the present invention provide a method that uses a pre-defined system message to inform a pre-trained LLM about the context of a relational database, for example including detailed information about a terminal management system, explaining its database schema, entity relational mappings, user translations, elements to ignore in the user query, and the type of SQL syntax to generate. The system message may include information for a schema of a relational database, information for a type of syntax to use for a database query statement, information for a relational mapping between entries in a relational database, information for at least one translated term to use for respective user inputted terminology, and/or information for confidential entries in the relational database, or the like.

Certain embodiments of the present invention provide a method for allowing a user to automatically generate custom reports on user-specific queries of information from a relational database that comprises data associated with a plurality of Automated Teller Machine.

Certain embodiments of the present invention leverage AI to report specific terminal data that an individual user may want to see.

Certain embodiments of the present invention allow users to request the information they may want using natural language. Aptly, chat context may be maintained to allow users to further refine their results. For example, a user may ask the following queries: "Show me the terminals in New York state that have a cash balance of less than $12.000", "Show me the terminals with an open incident", "Show me the all the terminals which have not had a transaction in the last 3 days", or the like.

Certain embodiments of the present invention provide an application configured with a pre-trained LLM instance, for example an Azure OpenAI instance or the like. The pre-trained LLM instance (e.g. Azure OpenAI instance) may be given information about the structure of a database (e.g. a relational database) and instructed how to generate database query statements (e.g. in Structured Query Language, SQL). For example, a user interface (e.g. a web-interface of a browser application on a computing device) may accept a natural language question from a user and send this to the pre-trained LLM instance (e.g. Azure OpenAI instance), which may generate a database query statement (e.g. SQL query). The generated database query statement (e.g. SQL query) may then be run against the relational database, and the results displayed on the user interface.

Certain embodiments of the present invention provide a system that allows users to query for information within a database (e.g. relational database) using natural languages (such as English). For example, a database may store a variety of information about terminals (e.g. terminals within a network of terminals) and a user interface may allow users to query information from the database using natural language. A pre-trained Large Language Model (e.g. OpenAI GPT-4o language model) may be used to convert natural language questions into database query statements (e.g. SQL queries) and the generated database query statements may be run against the terminal database. The query results may be presented as a report to users via the user interface (e.g. in text or tabular or graphical format or the like).

Certain embodiments of the present invention help empower users to capture insights on terminal-related data more effectively and/or provide customized views that may reduce the need for professional services or development teams to create custom reports and/or empower users to perform queries (e.g. SQL queries) without exposure to underlying data models.

### Brief Description of the Drawings

Embodiments of the present invention will now be described hereinafter, by way of example only, with reference to the accompanying drawings in which:
Figure 1 illustrates a computing system;
Figure 2 illustrates querying of a relational database responsive to a user-specific query, via the automatic generation of a database query statement by a pre-trained Large Language Model; and
Figure 3 illustrates a flowchart describing the steps taken to automatically generate, responsive to a user-specific query, at least one database query statement for querying a relational database that comprises data associated with a plurality of Automated Teller Machine.

In the drawings like reference numerals refer to like parts.

### Detailed Description

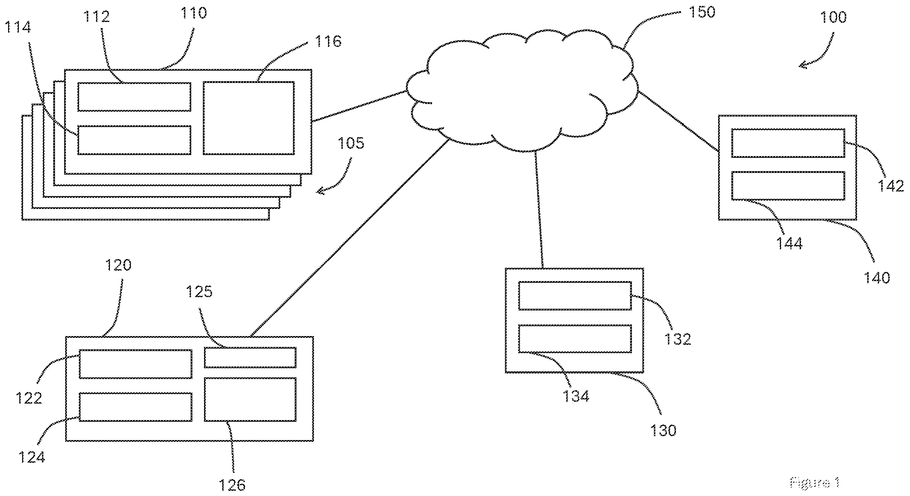

Figure 1 illustrates a computing system 100. In the computing system 100 there is a plurality of Automated Teller Machines (ATM) 105, including a first ATM 110, a computing device of a user 120, a terminal management computing device 130, and a LLM server 140. Each of the plurality of ATMs 105 may or may not be an Interactive Teller Machine (ITM). Each of the plurality of ATMs 105 may be in different locations and may include one or more processors, at least one memory and a display. For example, the first ATM 110 includes one or more processors 112, at least one memory 114 and a display 116. Each memory (e.g. the memory 114 of the first ATM 110) is a non-transitory computer-readable storage medium. Each memory stores executable software that is executable by the processors of the respective ATM. Each display (e.g. the display 116 of the first ATM 110) displays a graphical user interface for enabling the user to enter details and select options during transactions at the respective ATM. Each ATM may also include an encrypted PIN pad (not shown), a note dispenser, a receipt printer, a card slot for insertion of a user's bank card (not shown), a camera (not shown), a microphone (not shown), a barcode reader (not shown), a card reader (not shown), a speaker (not shown) or the like as will be appreciated by a person of skill in the art. The plurality of ATMs 105 may have information associated with the plurality of ATMs 105 as described herein, such as cash balance, location, identification number, operational status, or the like. When an ATM of the plurality of ATMs 105 is an ITM, the ATM may further include additional functionality. For example, the ITM may include a signature pad, an ID scanner, a telephonic handset, a wired headset, a tactile keyboard, a beamforming microphone or the like as will be appreciated by a person of skill in the art. This hardware may not be present on a conventional non-ITM ATM. The ITM may also have functionality to enable an audio and video communication link to be established with a remote teller device. This functionality may not be present on a conventional non-ITM ATM.

The computing device of the user 120 is a computing device of a user of the plurality of ATMs 105, for example an employee of an ATM operator who manages the plurality of ATMs 105. For example, the computing device of the user 120 may be a laptop, a desktop computer, a mobile device, a tablet or the like. The computing device 120 also includes one or more processors 122, at least one memory 124, a keyboard 125 and a display 126. The memory 124 is also a non-transitory computer readable storage medium. The memory 124 stores executable software that is executable by the processors of the computing device. The keyboard 125 is an example of a user input device and allows for the user to input a user-specific query in natural language by typing the query as text. Alternatively or additionally to the keyboard, there may be a different user input device, such as a touchscreen or the like. The display 126 displays a graphical user interface, such as a web-interface of a browser application executing on the computing device of the user 120, where the user-specific query may be input (e.g. as text data input via at least one user interface device, such as the keyboard 125) and at least one result associated with results data may be displayed.

The terminal management computing device 130 is a computing device with a terminal management application responsible for a plurality of ATMs. For example, the computing device 130 may be a server of the ATM operator or the like. The computing device 130 also includes one or more processors 132 and at least one memory 134. The memory 134 is also a non-transitory computer readable storage medium. The memory 134 stores executable software, for example the terminal management application, that is executable by the processors of the computing device. The executable software of the computing device 130, when executed by the processor(s), causes the computing device 130 to carry out the methodology described herein. It will be appreciated that the memory 134 of the terminal management computing device 130 may also store a relational database that includes data associated with the plurality of ATMs. Alternatively, a relational database may be stored in a memory of a different computing device or server and accessible by the terminal management computing device 130. It will be appreciated that the terminal management application and relational database may alternatively be stored on the computing device of the user.

The LLM server 140 hosts a pre-trained Large Language Model (LLM). For example, the LLM server 140 may be a server operated by a third-party that hosts a pre-trained LLM accessible by remote users, or may be a server operated by an ATM operator that hosts an instance of a pre-trained LLM. The LLM server 140 also includes one or more processors 142 and at least one memory 144. The memory 144 is also a non-transitory computer readable storage medium. The memory 144 stores executable software, for example the pre-trained Large Language Model. The pre-trained LLM may be a generative pre-trained transformer type LLM and/or may be a generative AI-based chatbot. For example, the pre-trained LLM may be an Azure OpenAI instance, aptly using the OpenAI GPT-4o language model or the like. It will be appreciated that the LLM may be pre-trained by a third party and accessible to use by a user without requiring further training. For example, GPT-4 is OpenAI's most advanced language model, capable of understanding and generating human-like text. It is a large multimodal model, meaning it can accept both text and image inputs and generate text outputs. For example, the pre-training of the LLM may enable the pre-trained LLM to provide a database query statement if given context on a relational database and syntax to use.

The plurality of ATMs 105, computing device of the user 120, terminal management computing device 130, and server 140 communicate via a network 150. The network 150 may be wired, wireless or a combination of wired and wireless. For example, the network is the internet.

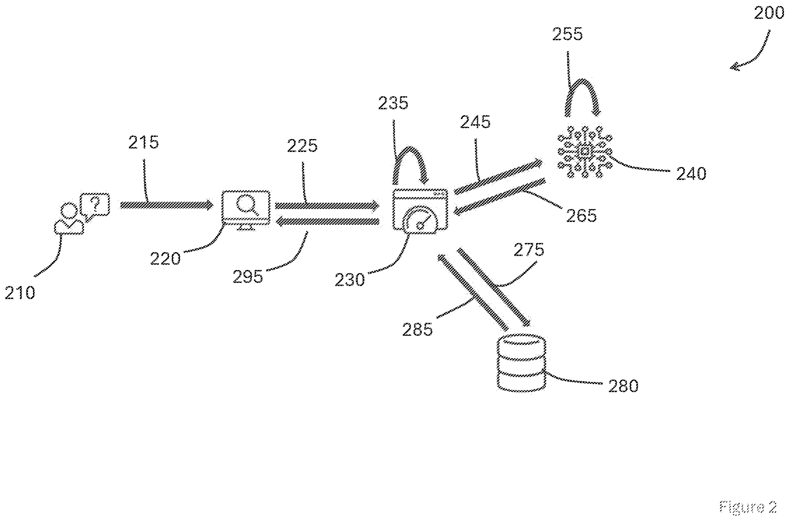

Figure 2 illustrates a system 200 showing applications, and interactions between applications, that execute to perform the methodology described herein upon interaction by a user 210, for example an employee of an operator of an ATM network (i.e. a plurality of ATMs). It will be appreciated that the applications of Figure 2 may execute on devices as shown with reference to Figure 1. For example, a browser application 220 may execute on a computing device of the user (e.g. the computing device of the user 120 of Figure 1), a terminal management application 230 may execute on a computing device (e.g. the terminal management computing device 130 of Figure 1, or alternatively the computing device of the user 120 of Figure 1), a pre-trained Large Language Model (LLM) 240 (e.g. an instance of Azure OpenAI) may execute on a LLM server (e.g. the LLM server 140 of Figure 1), and a relational database 280 may be stored on a computing device (e.g. the terminal management computing device 130 of Figure 1 or the like).

In a first interaction 215, the user 210 inputs a user-specific query to a web-interface of the browser application 220. For example, the user-specific query may be input as text data via at least one user interface device (such as a keyboard or touchscreen or the like). It will be appreciated that the user-specific query may take the form of a natural language question, such as a question in English or the like, which may be entered into a chat box or the like of the web-interface of the browser application 220. The user 210 may first open the browser application 220, for example opening a Terminal Management Portal, prior to entering the user-specific query. For example, the user 210 may request information associated with a plurality of ATMs.

In a second interaction 225, from the browser application 220 and terminal management application 230, the terminal management application 230 receives the user-specific query (e.g. the natural language question) from the browser application 220. For example, the user-specific query may be received as text data. It will be appreciated that the natural language question may be first transmitted or sent to the terminal management application 230 prior to the terminal management application 230 receiving it.

In a third interaction 235, at the terminal management application 230, the terminal management application 230 configures a pre-defined system message and query data is generated based on the user-specific query and the pre-defined system message. It will be appreciated that the query data includes message data, based on the user-specific query, and pre-defined system message data, based on the pre-defined system message. For example, the pre-defined system message data may be appended to the message data to generate the query data. The pre-defined system message may enable generation of a database query statement by the methodology described herein, for example by being configured to inform the pre-trained LLM 240 about the context. For example, the pre-defined system message may include information about the terminal management system, explaining its database schema, entity relational mappings, user translations, elements to ignore in the user query, and/or the type of syntax to generate (e.g. SQL syntax). By way of example only, the following pre-defined system message may be used:

Use the following database schema when creating your answers:
- Terminals (Id, Location, LocationCity)
- TerminalStatus (TerminalId, OpenIncidentCount, CashBalance, EstimatedDaysToCashOut)
- TerminalId column of TerminalStatus table is a foreign key of Id column of Terminals table
- When asked about city, map to LocationCity column of Terminals table
- When asked about balance, map to CashBalance of TerminalStatus table
- Replace Texas with TX, Oregon with OR, Illinois with IL, New York with NY Include column name headers in the query results. Do not use MySQL syntax.

In a fourth interaction 245, from the terminal management application 230 to the pre-trained LLM 240, the query data is transmitted to the pre-trained LLM 240. It will be appreciated that the query data includes message data and pre-defined system message data. In a fifth interaction 255, at the pre-trained LLM 240, the pre-trained LLM 240 generates at least one database query statement (e.g. SQL statement) based on the query data. For example, the pre-trained LLM 240 uses a pre-trained AI model like GPT-4. It will be appreciated that the pre-trained LLM 240 may understand the context and the type of syntax of database query statement to generate based on the pre-defined system message provided as pre-defined system message data. Alternatively, it will be appreciated that the LLM may be pre-trained to understand how it can generate database query statements based on user inputs without needing a system message to be transmitted with the user query.

In a sixth interaction 265, from the pre-trained LLM 240 to the terminal management application 230, the at least one database query statement is transmitted from the pre-trained LLM 240 and received by the terminal management application 230. That is to say, the database query statement (e.g. SQL statement) is returned to the terminal management application 230. In a seventh interaction 275, from the terminal management application 230 to the relational database 280, the at least one database query statement is transmitted to the relational database 280 and run against the relational database 280 to query the relational database 280 for the requested information relating to the plurality of ATMs. In an eighth interaction 285, from the relational database 280 to the terminal management application 230, results data providing information retrieved from the relational database 280 based on the database query statement is returned to the terminal management application 230. In a ninth interaction 295, from the terminal management application 230 to the browser application 220, the results data is provided to the browser application 220 for the user, for example by displaying (e.g. in tabular format) at least one result associated with the results data in web-interface of the browser application 220.

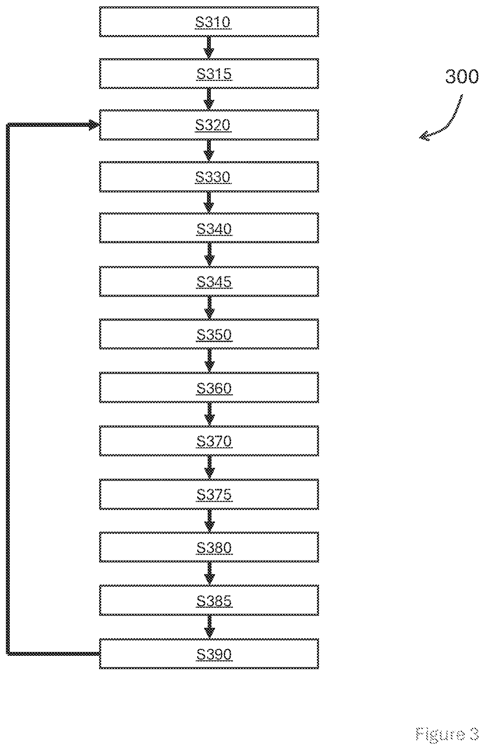

Figure 3 illustrates a method 300 for automatically generating, responsive to a user-specific query, at least one database query statement for querying a relational database that comprises data associated with a plurality of Automated Teller Machines. It will be appreciated that the method 300 may be performed with the computing systems described herein, for example the computing system 100 of Figure 1 or the system 200 of Figure 2.

First, in an initial step S310, a terminal management application is provided that is responsible for a plurality of ATMs. For example, the terminal management application may be executed on a computing device of an ATM operator that runs a network of ATMs. The terminal management application may communicate with a relational database that may store data associated with the plurality of ATMs, for example data representing information relating to ATM identification, location, cash balance, device faults or the like. It will be appreciated that the relational database may have a pre-defined database schema, such as how the relational database stores data in one or more tables, consisting of rows and columns, with relational mappings between entries in the relational database. By way of example only, a relational database for a plurality of ATMs may have a schema including a terminal information table (including columns for identification, location, and city information for each terminal), and a terminal status table (including columns for identification, open incident count, cash balance, and estimated days to cash out). For example, a relational mapping between tables may be that the identification column in the terminal status table is a foreign key of the identification column of the terminal information table. It will be appreciated that the relational database may be stored on the same computing device as the terminal management application or alternatively may be stored on a different computing device or server of the ATM operator.

Next, in a system message step S315, a pre-defined system message may be provided to the terminal management application. For example, the pre-defined system message may be configured and provided in advance of the method 300 or may be reconfigured from time to time by a development team of the ATM operator or the like, for example to reflect changes in the relational database or to optimise operation of the method 300. It will be appreciated that the pre-defined system message enables generation of a database query statement by the method 300. For example, the pre-defined system message may include information for one or more of the following: a schema (e.g. organisation of the data) of the relational database, a type of syntax (e.g. SQL) to use for a database query statement, a relational mapping between entries (e.g. which columns in different tables correspond to each other) in the relational database, at least one translated term to use for user inputted terminology (e.g. which words in natural language correspond to which column identifiers in the relational database), confidential entries (e.g. what information to not provide to a certain user) in the relational database, or the like. The pre-defined system message may be provided in natural language and stored as pre-defined system message data that represents the pre-defined system message. By way of example only, the following pre-defined system message may be used:

Use the following database schema when creating your answers:
- Terminals (Id, Location, LocationCity)
- TerminalStatus (TerminalId, OpenIncidentCount, CashBalance, EstimatedDaysToCashOut)
- TerminalId column of TerminalStatus table is a foreign key of Id column of Terminals table
- When asked about city, map to LocationCity column of Terminals table
- When asked about balance, map to CashBalance of TerminalStatus table
- Replace Texas with TX, Oregon with OR, Illinois with IL, New York with NY Include column name headers in the query results. Do not use MySQL syntax.

It will be appreciated that the above example of the pre-defined system message may provide information that the relational database has a schema consisting of a Terminals (with columns entitled Id, Location, LocationCity) and TerminalStatus (with columns entitled TerminalId, OpenIncidentCount, CashBalance, EstimatedDaysToCashOut) table and has a relational mapping that the TerminalId column of the TerminalStatus table is a foreign key of the Id column of the Terminals table. It may also provide translated terms for user inputted terminology relating to cities (mapping to the LocationCity column of the Terminals table) and balance (mapping to the CashBalance column of the TerminalStatus table), and relating to the locations Texas, Oregon, Illinois, or New York (mapping to TX, OR, IL, NY respectively). It may also provide information on the desired form of query results (to include column name headers in the results) and to not use MySQL syntax to generate the database query statement.

Then, in a user query step S320, a user provides a user-specific query requesting information associated with the plurality of ATMs. For example, the user may wish to know cash balance information or device fault information or the like. The user-specific query may be input at a computing device of the user, for example to a web-interface of a browser application executing on the computing device of the user. It will be appreciated that the user-specific query may be input as a natural language query, for example a question in English, and may be input via at least one user input device (e.g. a keyboard) and received as text data representing the user-specific query.

Next, in a terminal query step S330, the user-specific query is received by the terminal management application (as provided in the initial step S310). For example, the user-specific query may be received as message data representing the user-specific query from the computing device of the user, such as text data input via at least one user input device. Then, in a message generation step S340, query data is generated by the terminal management application from the message data (indicative of the user-specific query). The query data may also include the pre-defined system message data (indicative of the pre-defined system message), as provided in the system message step S315. For example, the query data may include the pre-defined system message data appended to the message data. Alternatively, as noted above, a pre-defined system message may have been used to pre-train an LLM (as described in step S345 below) such that no system message needs to be appended to each user query. Further alternatively, a pre-defined system message may be stored on the computing device where the LLM (as described in step S345 below) is located and input into the LLM when a user query is received.

Next, in a message transmittal step S345, the query data (optionally including the message data and the pre-defined system message data) is transmitted from the terminal management application to a pre-trained LLM. For example, the pre-trained LLM may be a generative ore-trained transformer type LLM and/or a generative AI-based chatbot, such as an Azure OpenAI instance (aptly using the OpenAI GPT-4o language model or the like), optionally operated by a third party LLM operator and accessible as a service.

Then, in a LLM step S350, the pre-trained LLM automatically generates at least one database query statement based on the query data (including the message data representing the user-specific query). That is to say, the query data is provided as input to the pre-trained LLM and at least one database query statement is output from the pre-trained LLM. For example, the pre-trained LLM may provide the at least one database query statement in a certain syntax, e.g. SQL, optionally based on instructions provided in the pre-defined system message. It will be appreciated that automatic generation of a database query statement may means that the database query statement (for querying a relational database) is provided by the method 300 in response to a natural language user-specific query without further interaction by the user or another human being. The automatic generation, for example, may not require a user to understand or know any syntax for a database query statement. The automatic generation of at least one database query statement may use context and information provided in the pre-defined system message (with pre-defined system message data included as part of the query data) to be able to generate a database query statement based on a natural language user-specific query.

Next, in a query transmittal step S360, the at least one database query statement is transmitted from the pre-trained LLM and received by the terminal management application. It will be appreciated that the at least one database query statement may be transmitted as database query statement data that represents the at least one database query statement. The at least one database query statement may then be transmitted by the terminal management application to the relational database.

Then, in a database query step S370, the at least one database query statement is run on the relational database to query the relational database for the information associated with the plurality of ATMs requested by the user in the user-specific query. Next, in a results step S375, subsequent to querying the relational database with the at least one database query statement, results data representing information associated with the plurality of ATMs, as queried by the at least one database query statement, is returned from the relational database and received by the terminal management application. For example, in response to a query requesting information on ATMs located in New York City, a list of identification numbers for ATMs located in New York City along with respective cash balances may be provided and represented in the results data. It will be appreciated that the format of the results represented in the results data may be encoded in the database query statement by the pre-trained LLM in response to information included in the pre-defined system message.

Next, in a results transmittal step S380, the results data is transmitted from the terminal management application to the computing device of the user (i.e. the user who provided the user-specific query) to provide the user with the requested information associated with the plurality of ATMs. Then, in a results display step S385, at least one result associated with the results data is displayed, for example on a display of the computing device of the user (such as in the web-interface of the browser application). It will be appreciated that the results may be displayed in a preconfigured format, such as a tabular format.

Finally, in an end step S390, the user receives the requested information associated with the plurality of ATMs. It will be appreciated that following the end step S390, the method 300 may continue at the user query step S320, where the user (or a different user) may ask a further user-specific query. According to certain embodiments, the pre-trained LLM may maintain chat context so that the user can ask further user-specific queries to refine the results subsequent to executing the method 300 a certain number of times.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for automatically generating, responsive to a user-specific query, at least one database query statement for querying a relational database that comprises data associated with a plurality of Automated Teller Machines, comprising:
receiving, by a terminal management application responsible for a plurality of Automated Teller Machines (ATMs), a user-specific query requesting information associated with the plurality of ATMs;
transmitting, by the terminal management application, query data, based on the user-specific query, to a pre-trained Large Language Model (LLM); and
responsive to the query data being provided as an input into the pre-trained LLM, receiving, by the terminal management application, at least one database query statement, for querying a relational database that comprises data associated with the plurality of ATMs, from the pre-trained LLM.

2. The method as claimed in claim 1, further comprising transmitting the query data comprises transmitting message data indicative of the user-specific query and transmitting pre-defined system message data indicative of a pre-defined system message for enabling generation of said at least one database query statement.

3. The method as claimed in claim 2, further comprising providing the pre-defined system message as a message comprising information for a schema of the relational database.

4. The method as claimed in claim 2 or 3, further comprising providing the pre-defined system message as a message comprising information for a type of syntax to use for said at least one database query statement; and/or
further comprising providing the pre-defined system message as a message comprising information for a relational mapping between entries in the relational database.

5. The method as claimed in any one of claims 2 to 4, further comprising providing the pre-defined system message as a message comprising information for at least one translated term to use for respective user inputted terminology; and/or
further comprising providing the pre-defined system message as a message comprising information for confidential entries in the relational database; and/or
further comprising prior to transmitting the query data, appending the pre-defined system message data to the message data.

6. The method as claimed in any preceding claim, further comprising receiving, by the terminal management application, the user-specific query as text data input via at least one user input device of a computing device of a user.

7. The method as claimed in any preceding claim, further comprising providing the at least one database query statement output from the pre-trained LLM in Structured Query Language (SQL).

8. The method as claimed in any preceding claim, further comprising transmitting, by the terminal management application, the at least one database query statement to the relational database to query the relational database for said information associated with the plurality of ATMs.

9. The method as claimed in claim 8, further comprising receiving, by the terminal management application, results data comprising data indicative of said information associated with the plurality of ATMs from the relational database.

10. The method as claimed in claim 9, further comprising responsive to receiving the results data, transmitting the results data to a computing device of a user who provided the user-specific query.

11. The method as claimed in claim 10, further comprising displaying, on a display of the computing device, at least one result associated with the results data; and optionally
further comprising displaying the at least one result in tabular format.

12. The method as claimed in any preceding claim, further comprising providing the pre-trained LLM as a generative pre-trained transformer type LLM; and/or
further comprising providing the pre-trained LLM as a generative AI-based chatbot.

13. The method as claimed in any preceding claim, further comprising:
inputting the user-specific query to a web-interface of a browser application executing on a computing device of a user; and
receiving, by the terminal management application, the user-specific query from the computing device.

14. A computing device, comprising:
at least one processor arranged to execute a terminal management application that is responsible for a plurality of Automated Teller Machines (ATMs), and that is configured to:
receive a user-specific query requesting information associated with the plurality of ATMs;
transmit query data, based on the user-specific query, to a pre-trained Large Language Model (LLM); and
receive at least one database query statement, for querying a relational database that comprises data associated with the plurality of ATMs, from the pre-trained LLM.

15. A computer program comprising instructions which, when executed by a computing device, cause the computing device to carry out the method defined by any one of claims 1 to 13.
